# EUROPEAN PATENT SPECIFICATION

(11) **EP 3 214 797 B1**
(45) Date of publication and mention of the grant of the patent: **29.06.2022**
(21) Application number: 16464001.3
(22) Date of filing: 01.03.2016
(51) Int. Cl.: H04L 9/08, G09C 1/00

(54) **DERIVING A DEVICE UNIQUE ENCRYPTION KEY OF A SYSTEM ON CHIP USING A PHYSICAL UNCLONABLE FUNCTION**
ABLEITUNG EINES EINZIGARTIGEN VORRICHTUNGSVERSCHLÜSSELUNGSSCHLÜSSELS EINES SYSTEMS AUF EINEM CHIP MITHILFE EINER PHYSIKALISCHEN UNKLONBAREN FUNKTION
DÉRIVATION D'UNE CLÉ DE CRYPTAGE UNIQUE DE DISPOSITIF D'UN SYSTÈME SUR PUCE À L'AIDE D'UNE FONCTION PHYSIQUE INCLONABLE

(43) Date of publication of application: 06.09.2017
(73) Proprietor: Siemens Aktiengesellschaft, 80333 München (DE)
(72) Inventor: Pitu, Ciprian-Leonard, 500371 Brasov (RO)
(74) Representative: Maier, Daniel Oliver

(56) References cited:
- US-A1- 2012 137 137
- SHIJUN ZHAO ET AL: "Providing Root of Trust for ARM TrustZone using SRAM PUFs", INTERNATIONAL ASSOCIATION FOR CRYPTOLOGIC RESEARCH,, vol. 20140625:034646, 25 June 2014 (2014-06-25), pages 1-12, XP061016339, [retrieved on 2014-06-25]
- B Skori ET AL: "Physical aspects of digital security", Lecture notes, 1 August 2015 (2015-08-01), XP055432789, Retrieved from the Internet: URL:http://security1.win.tue.nl/~bskoric/p hyssec/files/LectureNotes_2IMS10_v1.6.pdf [retrieved on 2017-12-07]
- YEVGENIY DOSDIS ET AL: "Security with noisy data , Chapter 5: Fuzzy Extractors", 1 January 2007 (2007-01-01), SECURITY WITH NOISY DATA : ON PRIVATE BIOMETRICS, SECURE KEY STORAGE AND ANTI-COUNTERFEITING; [SECURITY WITH NOISY DATA], SPRINGER, GB, PAGE(S) 371 - 416, XP002712672, ISBN: 978-1-84628-983-5

## Description

### FIELD OF THE INVENTION

The present invention relates to a method implemented in a computer system for deriving a device unique encryption key of a system on chip using a physical unclonable function, the method including the following steps
- challenging the physical unclonable function during the enrolment phase,
- error correcting the response of the physical unclonable function,
- generating helper data by using the corrected response of the physical unclonable function and a manufacturer's encryption key,
- generating a reconstructed encryption key by using the helper data. The presentinvention also comprises respective computer program code means, as well as a respective system on chip device.

### STATE OF THE ART

A system on chip (SoC) is an integrated circuit (IC) that integrates all components of a computer or other electronic system into a single chip. It may contain digital, analog, mixed-signal, and often radio-frequency functions, all on a single chip substrate. A typical application of SoCs is in the area of embedded systems. An embedded system is a computer system with a dedicated function within a larger mechanical or electrical system, often with real-time computing constraints.

SoCs can be implemented as an application-specific integrated circuit (ASIC) or using a field-programmable gate array. (FPGA). A field-programmable gate array (FPGA) is an integrated circuit designed to be configured by a customer or a designer after manufacturing. The FPGA configuration is generally specified using a hardware description language (HDL), similar to that used for an application-specific integrated circuit (ASIC).

A physical unclonable function (PUF) is a physical entity that is embodied in a physical structure and is easy to evaluate but hard to predict. A PUF is the hardware analog of a one-way function. PUFs are usually implemented in integrated circuits with high security requirements. PUFs depend on the uniqueness of their physical microstructure. This microstructure depends on random physical factors introduced during manufacturing. These factors are unpredictable arid uncontrollable which makes it virtually impossible to duplicate or clone the structure.

Rather than embodying a single cryptographic key, PUFs implement challenge-response authentication to evaluate this microstructure. When a physical stimulus is applied to the structure, it reacts in an unpredictable (but repeatable) way due to the complex interaction of the stimulus with the physical microstructure of the device. The applied stimulus is called the challenge, and the reaction of the PUF is called the response. A specific challenge and its corresponding response together form a challenge-response pair. The device's identity is established by the properties of the microstructure itself. As this structure is not directly revealed by the challenge-response mechanism such a device is resistant to spoofing attacks.

Using a fuzzy extractor or key extractor PUFs can also be used to extract a unique strong cryptographic key from the physical microstructure. The same unique key is reconstructed every time the PUF is evaluated. The challenge-response mechanism is then implemented using cryptography. In many applications it is important that the output is stable. If the PUF is used for a key in cryptographic algorithms it is necessary that error correction will be done to correct any errors caused by the underlying physical processes and reconstruct the exact same key each time under all operating conditions.

A physical unclonable function (PUF) establishes a data string which depends upon partially random physical characteristics of the physically unclonable function. The contents of a PUF cannot be predetermined, and PUF responses are somewhat noisy. PUFs have proven to be advantageous alternatives for many forms of secure identification, including the storing of keys, identifiers, and the like in secure memories.

The data string may depend on a stable state in which a configuration of components of the PUF settles upon the SoC's power-up. An example of a PUF is a volatile memory which shows a power-up contents which depends on the partially random physical characteristics of the memory. Manufacturing variations lead to different physical characteristics for different memories.

Using a PUF the need for secure memory to store a key is circumvented. A PUF furthermore provides natural protection against unauthorized attempts to obtain the cryptographic key through physical reverse engineering (also known as tampering), since damage inflicted on the PUF during the attempt would change the initial data string beyond repair.

Since the behavior of a PUF depends on small variations, a certain error percentage is unavoidable. An error correction procedure can be used to correct for these fluctuations, and make sure that the reliable data string is identical, each time it is derived from the PUF. Using so-called helper data the initial data string is mapped to one or more error correctable data words. An error correctable data word is a data word which is close to a code word of an error correcting code. An error correctable data word may be seen as the sum of a code word and an error word. By applying an error correcting algorithm corresponding to the error correcting code, the error correctable data words are decoded into corrected and decoded data words.

PUF based security mechanisms are used to derive a device unique key, based on the intrinsic physical qualities of the silicone device itself. During enrolment phase the helper data is generated, based on the PUF response and the encryption key provided by the manufacturer of the SoC, and stored on-chip. During normal operation the PUF response is used together with the helper data to regenerate the key. The main disadvantage of this approach is the lack of options to change the key - once the helper data is generated there is no possibility to regenerate it as the enrolment mechanism is disabled.

So if the manufacturer of the SoC generates the helper data during manufacture using his own encryption keys there is no possibility for a software developer to regenerate the helper data based on a new key which is owned by the software developer.

The document "Shijun Zhao et al.: "Providing Root of Trust for ARM Trust Zone using SRAM PUFs", International Association for cryptologic research, vol. 20140625: 034646, pages 1 - 12" discloses a procedure of the root of trust for the Trusted Execution Environment provided by ARM TrustZone based on a SRAM physical unclonable function (PUF). During a generate procedure run by the manufacturer a randomly primary seed, which is associated with the device, is encoded with a error code correction code to obtain a code which is linked to the start-up values of the SRAM on-chip used as PUF to create helper data. These helper data are stored in a memory and they are used to reproduce the same primary seed during a reproduce procedure. So this method does not provide the possibility to regenerate the helper data based on a new key which is owned by the software developer.

Furthermore, document US 2012/137137 A1 teaches a method and a device for key provisioning of hardware devices, wherein a device unique key is generated by a key generation server which is stored in the hardware device. A provisioning identifier and a provisioning key is derived for the hardware device from the device unique key. The provisioning identifier and the provisioning key arestored in a key provisioning server for later use in on-the-field key provisioning.

### SUMMARY OF THE INVENTION

One object of the present invention is to provide a possibility to change the unique encryption key of a system on chip after the first enrolment.

According to the present invention the process for deriving a device unique encryption key of a system on chip using a physical unclonable function thus further includes the following steps:
- feeding the corrected response of the physical unclonable function to the enrolment module,
- generating helper data in the enrolment module by using the corrected response of the physical unclonable function and the said manufacturer's key,
- storing the helper data and keeping the enrolment module enabled after first enrolment.

The solution according to the present invention is similar to the method used in common PUF based systems. The main difference is that according to the invention the enrolment module is not disabled after the first enrolment. Accordingly the enrolment module can be used after the first enrolment to generate new helper data based on a new encryption key.

The helper data can be stored in the enrolment module itself, or in any memory of the system on chip since the helper data does not contain any secrets.

One embodiment of the invention is that during normal operation of the SoC, namely upon power-up, the PUF (or the PUF device, respectively) is challenged. Again the PUF response is error corrected and the encryption key is reconstructed from the corrected PUF response and the previously stored helper data. The so generated key is therefore used to further decrypt the memory and thus enabling the system to boot-up. So during power-up the following steps can be taken:
- challenging the physical unclonable function,
- error correcting the response of the physical unclonable function,
- generating a reconstructed encryption key by using the helper data, e.g. stored in the enrolment module, and the corrected response of the physical unclonable function
- decrypting the memory using the reconstructed encryption key.

Another embodiment of the invention refers to when during a firmware update the SoC receives a new firmware image. The new firmware image is encrypted, usually it has been encrypted using the original encryption key provided by the manufacturer of the SoC. The new firmware image contains both, the new software and a new encryption key. The new software, inside the new firmware image, itself is encrypted using the new encryption key.

According to this embodiment of the invention the following steps are taken during updating of firmware:
- sending a firmware image which is encrypted with the said manufacturer's encryption key and which contains both a new software and an new manufacturer's encryption key, whereas the new-software itself has been encrypted with the new manufacturer's encryption key,
- challenging the physical unclonable function on the firmware update command,
- error correcting the response of the physical unclonable function,
- generating a reconstructed encryption key by using the helper data e.g. stored in the enrolment module, and the corrected response of the physical unclonable function,
- decrypting the firmware image by using-the reconstructed encryption key,
- triggering the enrolment module to generate new helper data based on the new manufacturer's encryption key from within the firmware image and based on the corrected response of the physical unclonable function,
- storing the new software which is encrypted with the new manufacturer's encryption key,
- generate new helper data by using the corrected response of the physical unclonable function and the new manufacturer's encryption key,
- deleting the new manufacturer's encryption key.

So after the update process is finished, the SoC has been migrated to both a new encryption key and new software.

The present invention also comprises respective computer program code means which means is adapted to perform all the steps of the method according to the invention when the computer program is run on a system on chip.

The present invention further comprises a system on chip device for deriving a device unique encryption key according to the method of the present invention. The system includes
- means configured to generate a physical unclonable function,
- means configured to correct errors in the response of the physical unclonable function,
- an enrolment module configured to generate helper data by using the corrected response of the physical unclonable function and a manufacturer's encryption key, further configured to being kept enabled after first enrolment,
- a reconstructor configured to generate a reconstructed encryption key by using the helper data.

One possible embodiment of the invention is that the enrolment module is configured to store the helper data.

According to the invention the firmware update mechanism is used not only to update the software but also to update the encryption key. Under this approach better security for the SoC is achieved and the silicon device user is allowed to change the manufacturer provided keys.

The hardware components needed for the method according to the invention, or the system on chip device according to the invention, respectively, does not differ much from other hardware for known PUF based applications. The main difference is in the enrolment mechanism, or the enrolment module, respectively, because the enrolment mechanism or enrolment module is not disabled at the end of the first enrolment process.

### BRIEF DESCRIPTION OF FIGURES

The invention will be explained in closer detail by reference to a preferred embodiment, which is depicted schematically in the figures.
- Fig. 1: shows a possible structure for a SoC device according to the invention,
- Fig. 2: shows a flow diagram of the enrolment phase according to the invention,

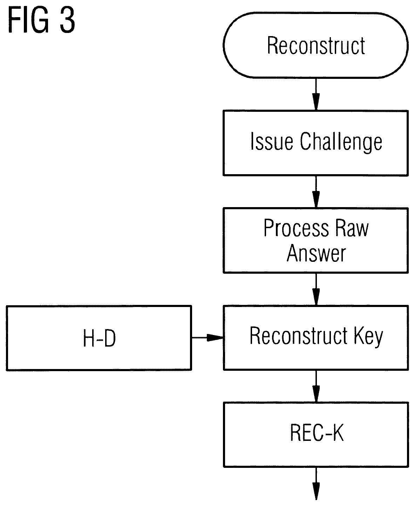

- Fig. 3: shows a flow diagram of the reconstruction phase according to the invention,
- Fig. 4: shows a flow diagram of the update process according to the invention.

### WAYS TO IMPLEMENT THE INVENTION

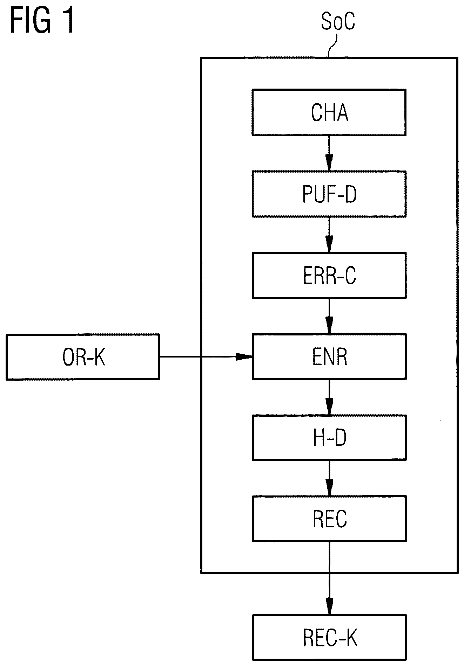

Fig. 1 shows a possible structure for a system on chip device SoC according to the invention. The SoC includes at least means labelled PUF-D, short for PUF device, andconfigured to generate a physical unclonable functions. PUF device PUF-D receives a challenge CHA and sends a response to a means ERR-C configured to correct errors in the response of the physical unclonable function PUF. This means ERR-C corrects possible errors and sends this corrected data to the enrolment module ENR which also receives the original manufacturer's encryption key OR-K. The enrolment module ENR generates the so called helper data H-D, based on the corrected PUF data and on the manufacturer's encryption key OR-K. This helper data H-D is stored on-chip, that is, on the SoC. For reconstruction of the encryption key during normal operation of the SoC the helper data is fed to the reconstructor REC which can generate a reconstructed encryption key REC-K by using the helper data H-D.

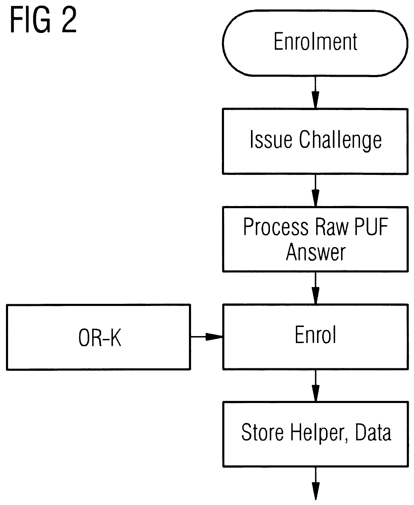

According to the invention the enrolment module ENR is not disabled but is kept enabled after first enrolment. The process of first enrolment is depicted in Fig. 2. The process "Enrolment" starts with a first step "Issue Challenge" where a challenge is sent to the PUF device PUF-D and a PUF response, also called PUF answer, is generated. Next the PUF answer is processed in the step "Process Raw PUF Answer", that is, the means ERR-C corrects possible errors and sends this corrected data to the enrolment module ENR, see Fig. 1. The step "Enrol" comprises the generation of helper data H-D, based on the corrected PUF data and on the manufacturer's encryption key OR-K, and next in step "Store Helper Data" the helper data H-D is stored in the SoC, e.g. in the enrolment module ENR of Fig. 1.

During normal operation of the SoC, when the power is switched on, the reconstruction process "Reconstruct" is started: in a first step "Issue Challenge" again a challenge is sent to the PUF device PUF-D and a PUF response, also called PUF answer, is generated. Next the PUF answer is processed in the step "Process Raw Answer", that is, the means ERR-C corrects possible errors and sends this corrected data to the reconstructor REC, see Fig. 1, which reconstructor REC - in step "Reconstruct Key" - generates a reconstructed encryption key REC-K by using the helper data H-D which has been stored on the SoC during first enrolment, as described in connection with Fig. 2. The reconstructed encryption key REC-K now can be used to further decrypt the memory, etc., and thus enables the SoC device to boot-up.

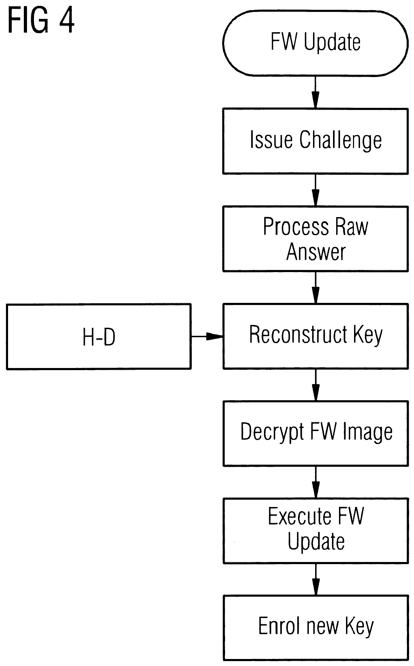

Fig. 4 now shows a flow diagram of the firmware update process "FW Update" according to the invention. Based on the firmware update command the SoC in a first step "Issue Challenge" challenges the PUF device PUF-D and a PUF response, also called PUF answer, is generated. Next the PUF answer is processed in the step "Process Raw Answer", that is, the means ERR-C corrects possible errors and sends this corrected data to the reconstructor REC, see Fig. 1, which reconstructor REC - in step "Reconstruct Key" - generates a reconstructed encryption key REC-K by using the helper data H-D which has been stored on the SoC during first enrolment, as described in connection with Fig. 2.

The reconstructed encryption key REC-K is used to decrypt the firmware image in a step "Decrypt FW Image". Upon issuing the update in step "Execute FW update" the new software, encrypted with the new key, is stored. When this process is finished new helper data is generated from the new encryption key in the step "Enrol new Key". For this purpose the SoC triggers the enrolment module ENR, see Fig. 1, which module ENR is still enabled, to generate new helper data based on the new encryption key from within the firmware image and the error corrected PUF response. When the new helper data is generated the new key is deleted. Now the SoC has been migrated to a new encryption key and to new software.

The scope of protection of the invention is defined by the subject-matter of the independent claims, dependent claims represent embodiments thereof.

### LIST OF REFERENCE SIGNS

- CHA: Challenge to the PUF
- ENR: Enrolment module
- ERR-C: Means configured to correct errors (Error Correction means)
- H-D: Helper data
- OR-K: Manufacturer's encryption key
- PUF-D: Means configured to generate a physical unclonable function (PUF device)
- REC: Reconstructor
- REC-K: Reconstructed encryption key
- SoC: System on chip device

## Claims

1. Method implemented in a computer system for deriving a device unique encryption key of a system on chip using a physical unclonable function, the method including the following steps during a first enrolment:
- challenging the physical unclonable function,
- then error correcting the response of the physical unclonable function,
- then generating helper data (H-D) by using the corrected response of the physical unclonable function and a manufacturer's encryption key (OR-K) in an enrolment module,
- and then storing the helper data (H-D) which can be used to generate a reconstructed encryption key (REC-K) and keeping the enrolment module enabled after the first enrolment;
the method furthermore comprising the following steps during updating of the firmware:
- sending a firmware image which is encrypted with the said manufacturer's encryption key (OR-K) and which contains both a new software and a new manufacturer's encryption key, whereas the new software itself has been encrypted with the new manufacturer's encryption key,
- challenging the physical unclonable function on the firmware update command,
- error correcting the response of the physical unclonable function,
- generating a reconstructed encryption key (REC-K) by using the helper data (H-D) stored during first enrolment and the corrected response of the physical unclonable function,
- decrypting the firmware image by using the reconstructed encryption key (REC-K),
- triggering the enrolment module (ENR) to generate new helper data based on the new manufacturer's encryption key from within the firmware image and based on the corrected response of the physical unclonable function,
- storing the new software which is encrypted with the new manufacturer's encryption key,
- generate new helper data by using the corrected response of the physical unclonable function and the new manufacturer's encryption key,
- deleting the new manufacturer's encryption key.

2. Method according to claim 1, wherein the helper data (H-D) are stored in the enrolment module (ENR).

3. Method according to claim 1 or 2, wherein the power-up comprises the following steps
- challenging the physical unclonable function,
- error correcting the response of the physical unclonable function,
- generating a reconstructed encryption key (REC-K) by using the helper data (H-D) and the corrected response of the physical unclonable function
- decrypting the memory using the reconstructed encryption key (REC-K).

4. Computer program code means adapted to perform all the steps of any one of the preceding claims when the computer program is run on a system on chip.

5. System on chip device (SoC) for deriving a device unique encryption key the system comprising:
- means (PUF-D) configured to receive a challenge (CHA) and to send a response to a means (ERR-C) configured to correct errors in the response of the physical unclonable function (PUF),
- means (ERR-C) configured to correct errors in the response of the physical unclonable function (PUF) and to send corrected data to an enrolment module (ENR),
- means configured to receive a new firmware image which is encrypted with the said manufacturer's encryption key (OR-K) and which contains both a new software and a new manufacturer's encryption key (OR-K), whereas the new software itself has been encrypted with the new manufacturer's encryption key (OR-K);
- means configured to trigger the enrolment module (ENR) to generate new helper data based on the corrected response of the physical unclonable function and the new manufacturer's encryption key (OR-K) from within the firmware image;
- means configured to store the new software encrypted with the new manufacturer's encryption key (OR-K);
- the enrolment module (ENR) configured to generate helper data (H-D) by using the corrected response of the physical unclonable function and a manufacturer's encryption key (OR-K) during first enrolment, further configured to being kept enabled after first enrolment and being configure to generate new helper data by using the corrected response of the physical unclonable function and the new manufacturer's encryption key (OR-K) during firmware update,
- a reconstructor (REC) configured to generate a reconstructed encryption key (REC-K) by using the helper data (H-D) stored during first enrolment, wherein the reconstructed encryption key (REC-K) is used to decrypt a memory during normal operation and to decrypt a firmware update during firmware update; and
- means being configured to delete the new manufacturer's encryption key (OR-K).

6. System on chip device (SoC) according to claim 5, wherein the enrolment module (ENR) is configured to store the helper data (H-D).

## Patentansprüche

1. In einem Computersystem implementiertes Verfahren zum Ableiten eines vorrichtungsspezifischen kryptografischen Schlüssels eines Ein-Chip-Systems mithilfe einer physikalischen unklonbaren Funktion, wobei das Verfahren bei einer Erstregistrierung folgende Schritte umfasst:
- Senden einer Aufforderung an die physikalische unklonbare Funktion,
- dann Korrigieren von Fehlern in der Antwort der physikalischen unklonbaren Funktion,
- dann Generieren von Helferdaten (H-D) unter Verwendung der korrigierten Antwort der physikalischen unklonbaren Funktion und eines kryptografischen Schlüssels (OR-K) vom Hersteller in einem Registriermodul,
- und dann Speichern der Helferdaten (H-D), die zum Generieren eines rekonstruierten kryptografischen Schlüssels (REC-K) verwendet werden können, und Beibehalten des aktivierten Zustands des Registriermoduls nach der Erstregistrierung,
wobei das Verfahren ferner folgende Schritte beim Aktualisieren der Firmware umfasst:
- Senden eines Firmware-Bilds, das mit dem kryptografischen Schlüssel (OR-K) vom Hersteller verschlüsselt ist und sowohl neue Software als auch einen neuen kryptografischen Schlüssel vom Hersteller enthält, während die neue Software selbst mit dem neuen kryptografischen Schlüssel vom Hersteller verschlüsselt ist,
- Senden einer Aufforderung an die physikalische unklonbare Funktion auf der Grundlage des Firmware-Aktualisierungsbefehls,
- Korrigieren von Fehlern in der Antwort der physikalischen unklonbaren Funktion,
- Generieren eines rekonstruierten kryptografischen Schlüssels (REC-K) unter Verwendung der bei der Erstregistrierung gespeicherten Helferdaten (H-D) und der korrigierten Antwort der physikalischen unklonbaren Funktion,
- Entschlüsseln des Firmware-Bilds unter Verwendung des rekonstruierten kryptografischen Schlüssels (REC-K),
- Veranlassen, dass das Registriermodul (ENR) auf der Grundlage des neuen kryptografischen Schlüssels vom Hersteller aus dem Firmware-Bild und der korrigierten Antwort der physikalischen unklonbaren Funktion neue Helferdaten generiert,
- Speichern der neuen Software, die mit dem neuen kryptografischen Schlüssel vom Hersteller verschlüsselt ist,
- Generieren neuer Helferdaten unter Verwendung der korrigierten Antwort der physikalischen unklonbaren Funktion und des neuen kryptografischen Schlüssels vom Hersteller,
- Löschen des neuen kryptografischen Schlüssels vom Hersteller.

2. Verfahren nach Anspruch 1, wobei die Helferdaten (H-D) in dem Registriermodul (ENR) gespeichert werden.

3. Verfahren nach Anspruch 1 oder 2, wobei das Einschalten folgende Schritte umfasst:
- Senden einer Aufforderung an die physikalische unklonbare Funktion,
- Korrigieren von Fehlern in der Antwort der physikalischen unklonbaren Funktion,
- Generieren eines rekonstruierten kryptografischen Schlüssels (REC-K) unter Verwendung der Helferdaten (H-D) und der korrigierten Antwort der physikalischen unklonbaren Funktion,
- Entschlüsseln des Speichers unter Verwendung des rekonstruierten kryptografischen Schlüssels (REC-K).

4. Computerprogrammcodemittel, die so ausgelegt sind, dass sie alle Schritte nach einem der vorhergehenden Ansprüche durchführen, wenn das Computerprogramm auf einem Ein-Chip-System ausgeführt wird.

5. Ein-Chip-System-Vorrichtung (SoC) zum Ableiten eines vorrichtungsspezifischen kryptografischen Schlüssels, wobei das System Folgendes umfasst:
- ein Mittel (PUF-D), das so konfiguriert ist, dass es eine Aufforderung (CHA - Challenge) empfängt und eine Antwort zu einem Mittel (ERR-C) sendet, das so konfiguriert ist, dass es Fehler in der Antwort der physikalischen unklonbaren Funktion (PUF) korrigiert,
- ein Mittel (ERR-C), das so konfiguriert ist, dass es Fehler in der Antwort der physikalischen unklonbaren Funktion (PUF) korrigiert und korrigierte Daten zu einem Registriermodul (ENR) sendet,
- ein Mittel, das so konfiguriert ist, dass es ein neues Firmware-Bild empfängt, das mit dem kryptografischen Schlüssel (OR-K) vom Hersteller verschlüsselt ist und sowohl eine neue Software als auch einen neuen kryptografischen Schlüssel (OR-K) vom Hersteller enthält, während die neue Software selbst mit dem neuen kryptografischen Schlüssel (OR-K) vom Hersteller verschlüsselt wurde,
- ein Mittel, das so konfiguriert ist, dass es veranlasst, dass das Registriermodul (ENR) auf der Grundlage der korrigierten Antwort der physikalischen unklonbaren Funktion und des neuen kryptografischen Schlüssels (OR-K) vom Hersteller aus dem Firmware-Bild neue Helferdaten generiert,
- ein Mittel, das so konfiguriert ist, dass es die neue Software speichert, die mit dem neuen kryptografischen Schlüssel (OR-K) vom Hersteller verschlüsselt ist,
- das Registriermodul (ENR), das so konfiguriert ist, dass es unter Verwendung der korrigierten Antwort der physikalischen unklonbaren Funktion und eines kryptografischen Schlüssels (OR-K) vom Hersteller bei der Erstregistrierung Helferdaten (H-D) generiert, und ferner so konfiguriert ist, dass es nach der Erstregistrierung aktiviert bleibt und dass es unter Verwendung der korrigierten Antwort der physikalischen unklonbaren Funktion und des neuen kryptografischen Schlüssels (OR-K) vom Hersteller bei der Firmware-Aktualisierung neue Helferdaten generiert,
- einen Rekonstruierer (REC), der so konfiguriert ist, dass er unter Verwendung der bei der Erstregistrierung gespeicherten Helferdaten (H-D) einen rekonstruierten kryptografischen Schlüssel (REC-K) generiert, wobei der rekonstruierte kryptografische Schlüssel (REC-K) im normalen Betrieb zum Entschlüsseln eines Speichers und bei der Firmware-Aktualisierung zum Entschlüsseln einer Firmware-Aktualisierung verwendet wird, und
- ein Mittel, das so konfiguriert ist, dass es den neuen kryptografischen Schlüssel (OR-K) vom Hersteller löscht.

6. Ein-Chip-System-Vorrichtung (SoC) nach Anspruch 5, wobei das Registriermodul (ENR) so konfiguriert ist, dass es die Helferdaten (H-D) speichert.

## Revendications

1. Procédé mis en œuvre dans un système informatique pour dériver une clé de cryptage unique de dispositif d'un système sur puce en utilisant une fonction physique inclonable, le procédé incluant les étapes qui suivent pendant un premier enrôlement :
- la mise au défi de la fonction physique inclonable ;
- puis la correction en termes d'erreur(s) de la réponse de la fonction physique inclonable ;
- puis la génération de données d'assistance (H-D) en utilisant la réponse corrigée de la fonction physique inclonable et une clé de cryptage de fabricants (OR-K) dans un module d'enrôlement ;
- et puis le stockage des données d'assistance (H-D) qui peuvent être utilisées pour générer une clé de cryptage reconstruite (REC-K) et le maintien dans l'état activé du module d'enrôlement après le premier enrôlement ;
le procédé comprenant en outre les étapes qui suivent pendant la mise à jour du microprogramme :
- l'envoi d'une image de microprogramme qui est cryptée à l'aide de ladite clé de cryptage de fabricant (OR-K) et qui contient à la fois un nouveau logiciel et une nouvelle clé de cryptage de fabricant, tandis que le nouveau logiciel lui-même a été crypté à l'aide de la nouvelle clé de cryptage de fabricant ;
- la mise au défi de la fonction physique inclonable lors de la commande de mise à jour de microprogramme ;
- la correction en termes d'erreur(s) de la réponse de la fonction physique inclonable ;
- la génération d'une clé de cryptage reconstruite (REC-K) en utilisant les données d'assistance (H-D) qui ont été stockées pendant le premier enrôlement et la réponse corrigée de la fonction physique inclonable ;
- le décryptage de l'image de microprogramme en utilisant la clé de cryptage reconstruite (REC-K) ;
- le déclenchement du module d'enrôlement (ENR) pour générer de nouvelles données d'assistance sur la base de la nouvelle clé de cryptage de fabricant à partir de l'intérieur de l'image de microprogramme et sur la base de la réponse corrigée de la fonction physique inclonable ;
- le stockage du nouveau logiciel qui est crypté à l'aide de la nouvelle clé de cryptage de fabricant ;
- la génération de nouvelles données d'assistance en utilisant la réponse corrigée de la fonction physique inclonable et la nouvelle clé de cryptage de fabricant ; et
- la suppression de la nouvelle clé de cryptage de fabricant.

2. Procédé selon la revendication 1, dans lequel les données d'assistance (H-D) sont stockées dans le module d'enrôlement (ENR).

3. Procédé selon la revendication 1 ou 2, dans lequel la mise en marche comprend les étapes qui suivent :
- la mise au défi de la fonction physique inclonable ;
- la correction en termes d'erreur(s) de la réponse de la fonction physique inclonable ;
- la génération d'une clé de cryptage reconstruite (REC-K) en utilisant les données d'assistance (H-D) et la réponse corrigée de la fonction physique inclonable ; et
- le décryptage de la mémoire en utilisant la clé de cryptage reconstruite (REC-K).

4. Moyen de code de programme informatique adapté pour réaliser toutes les étapes selon l'une quelconque des revendications précédentes lorsque le programme informatique est exécuté sur un système sur puce.

5. Dispositif de système sur puce (SoC) pour dériver une clé de cryptage unique de dispositif, le système comprenant :
- un moyen (PUF-D) qui est configuré pour recevoir un défi (CHA) et pour envoyer une réponse à un moyen (ERR-C) qui est configuré pour corriger les erreurs dans la réponse de la fonction physique inclonable (PUF) ;
- un moyen (ERR-C) qui est configuré pour corriger les erreurs dans la réponse de la fonction physique inclonable (PUF) et pour envoyer les données corrigées à un module d'enrôlement (ENR) ;
- un moyen qui est configuré pour recevoir une nouvelle image de microprogramme qui est cryptée à l'aide de ladite clé de cryptage de fabricant (OR-K) et qui contient à la fois un nouveau logiciel et une nouvelle clé de cryptage de fabricant (OR-K), tandis que le nouveau logiciel lui-même a été crypté à l'aide de la nouvelle clé de cryptage de fabricant (OR-K) ;
- un moyen qui est configuré pour déclencher le module d'enrôlement (ENR) pour générer de nouvelles données d'assistance sur la base de la réponse corrigée de la fonction physique inclonable et de la nouvelle clé de cryptage de fabricant (OR-K) à partir de l'intérieur de l'image de microprogramme ;
- un moyen qui est configuré pour stocker le nouveau logiciel qui a été crypté à l'aide de la nouvelle clé de cryptage de fabricant (OR-K) ;
- le module d'enrôlement (ENR) qui est configuré pour générer les données d'assistance (H-D) en utilisant la réponse corrigée de la fonction physique inclonable et une clé de cryptage de fabricant (OR-K) pendant le premier enrôlement, qui est configuré en outre pour être maintenu activé après le premier enrôlement et qui est configuré pour générer de nouvelles données d'assistance en utilisant la réponse corrigée de la fonction physique inclonable et la nouvelle clé de cryptage de fabricant (OR-K) pendant la mise à jour de microprogramme ;
- un moyen de reconstruction (REC) qui est configuré pour générer une clé de cryptage reconstruite (REC-K) en utilisant les données d'assistance (H-D) qui sont stockées pendant le premier enrôlement, dans lequel la clé de cryptage reconstruite (REC-K) est utilisée pour décrypter une mémoire pendant un fonctionnement normal et pour décrypter une mise à jour de microprogramme pendant une mise à jour de microprogramme ; et
- un moyen qui est configuré pour supprimer la nouvelle clé de cryptage de fabricant (OR-K).

6. Dispositif de système sur puce (SoC) selon la revendication 5, dans lequel le module d'enrôlement (ENR) est configuré pour stocker les données d'assistance (H-D).
